# EUROPÄISCHE PATENTSCHRIFT

(11) **EP 2 683 881 B1**
(45) Veröffentlichungstag und Bekanntmachung des Hinweises auf die Patenterteilung: **13.04.2016**
(21) Anmeldenummer: 11790888.9
(22) Anmeldetag: 02.12.2011
(51) Int. Cl.: E03C 1/08, G05D 7/01

(54) **SANITÄRES DURCHFLUSSELEMENT MIT EINER DURCHFLUSSMENGENREGLER-EINHEIT UND VERFAHREN ZUR HERSTELLUNG DESSELBIGEN**
SANITARY THROUGHFLOW ELEMENT WITH A THROUGHFLOW REGULATOR UNIT AND METHOD FOR PRODUCING SAME
ÉLÉMENT D'ÉCOULEMENT SANITAIRE AVEC UNE UNITÉ RÉGULATRICE DE DÉBIT ET PROCÉDÉ DE FABRICATION DUDIT ÉLÉMENT D'ÉCOULEMENT SANITAIRE

(30) Priorität: 11.03.2011 DE 202011003875 U
(43) Veröffentlichungstag der Anmeldung: 15.01.2014
(73) Patentinhaber: Neoperl GmbH, 79379 Müllheim (DE)
(72) Erfinder: SÖCHTIG, Michael, 79395 Neuenburg (DE); WILDFANG, Fabian, 79379 Müllheim (DE)
(74) Vertreter: Börjes-Pestalozza, Henrich
(86) Internationale Anmeldenummer: PCT/EP2011/006042
(87) Internationale Veröffentlichungsnummer: WO 2012/123005

(56) Entgegenhaltungen:
- WO-A1-2008/067948
- DE-B- 1 228 570
- DE-C1- 10 228 490
- FR-A1- 2 275 254
- US-A- 2 950 063

## Beschreibung

Die Erfindung betrifft ein sanitäres Durchflusselement, das eine Durchflussmengenregler-Einheit mit einem, sich über den lichten Querschnitt eines Fluidleitungsabschnitts erstreckenden Trägerteil aufweist, welches Trägerteil zumindest zwei voneinander beabstandete Einsetzöffnungen hat, in denen jeweils ein Durchflussmengenregler angeordnet ist, wobei jeder Durchflussmengenregler einen im Querschnitt außenumfangseitig runden Drosselkörper aus elastischem Material aufweist, der zwischen sich und einer die Einsetzöffnung umgrenzenden Umfangswandung einen Steuerspalt begrenzt, wobei die Drosselkörper unter dem Druck des durchströmenden Fluids eine Komprimierung erfahren, die eine Umfangsweitung derselben bewirkt, die den Steuerspalt verengt.

Die Erfindung befasst sich auch mit einem Verfahren zur Herstellung eines solchen sanitären Durchflusselementes.

Man hat bereits Durchflussmengenregler geschaffen, die als Bestandteil einer sanitären Einsetzpatrone in den Wasserauslauf einer Wasseraualaufarmatur einsetzbar sind, um das aus dem Wasserauslauf pro Zeiteinheit ausströmende Wasservolumen druckunabhängig auf einen festgelegten Maximalwert zu begrenzen. Die vorbekannten Durchflussmengenregler können beispielsweise scheibenförmig ausgestaltet sein und eine auf beiden Stirnseiten des Durchflussmengenreglers offene Ringnut tragen, in die ein ringförmiger Drosselkörper aus elastischem Material eingesetzt ist. Dieser Drosselkörper begrenzt zwischen sich und einer inneren und/oder äußeren profilierten Umfangswandung des Durchflussmengenreglers einen Steuerspalt, dessen lichter Querschnitt sich durch Einformen des Drosselkörpers in die an der Umfangswandung vorgesehene Regelprofilierung unter dem Druck des durchströmenden Fluids verändert.

Der mit Hilfe dieser vorbekannten Durchflussmengenregler angestrebte Maximalwert der Durchflussleistung lässt sich beispielsweise durch die Dimensionierung des Drosselkörpers oder die Ausgestaltung der Regelprofilierung festlegen. Da das für den Drosselkörper verwendete Material von Charge zu Charge gewissen Eigenschaftsschwankungen unterliegt, lässt sich häufig jedoch auch der angestrebte Maximalwert nur durch Inkaufnahme vergleichsweise großer Toleranzen festlegen. Soweit Durchflussmengenregler für völlig unterschiedliche Maximalwerte der Durchflussleistung benötigt werden, bedarf es verschieden ausgestalteter Regler-Ausführungen, die sich in ihren Bestandteilen unterscheiden. Dadurch wird die Bevorratung und die Bereitstellung solcher Durchflussmengenregler noch zusätzlich erschwert.

Aus der DE 102 28 490 C1 ist bereits ein sanitäres Durchflusselement der eingangs erwähnten Art mit einer Durchflussmengenregler-Einheit vorbekannt, das ein plattenförmiges Trägerteil hat, welches sich über den lichten Querschnitt eines Fluidleitungsabschnitts erstreckt. Das Trägerteil weist zwei voneinander beabstandete und vorzugsweise koaxial zueinander angeordnete Einsetzöffnungen auf, in denen jeweils ein Durchflussmengenregler angeordnet ist. Jeder dieser Durchflussmengenregler weist einen ringförmigen und dementsprechend im Querschnitt außenumfangsseitig runden Drosselkörper aus elastischem Material auf, der zwischen sich und einer die Einsetzöffnung umgrenzenden Umfangswandung einen Steuerspalt begrenzt. Das aus DE 102 28 490 C1 vorbekannte Durchflusselement nutzt einen vergleichsweise großen Leitungsquerschnitt durch zumindest zwei, vorzugsweise koaxiale und funktionell voneinander unabhängige Regler-Einheiten. Dazu ist eine den äußeren Leitungsquerschnitt ausfüllende erste Regler-Einheit vorgesehen, die im Bereich ihres Steuerzapfens eine weitere zweite Regler-Einheit hat, die in einer im Steuerzapfen der ersten Regler-Einheit vorgesehenen Durchtrittsöffnung angeordnet ist. Während mit der ersten, vergleichsweise großen Regler-Einheit auch hohe Literleistungen pro Zeiteinheit eingeregelt werden können, ist mit der demgegenüber kleineren zweiten Regler-Einheit eine Feindosierung der durchströmenden Wassermenge möglich. Mit Hilfe des aus zumindest zwei Regler-Einheiten bestehenden vorbekannten Durchflusselements lässt sich die durchströmende Wassermenge auch in Trink- und Nutzwassernetzen mit großen Leistungsquerschnitten präzise einregeln.

Bei dem aus DE 102 28 490 C1 vorbekannten Durchflusselement erfolgt jedoch keine Komprimierung des Drosselkörpers in Durchflussrichtung und damit auch keine dadurch bewirkte Umfangsweitung eines solchen Drosselkörpers. Der in den Regler-Einheiten des vorbekannten Durchflusselements vorgesehene Drosselkörper wird zwar verformt, aber dabei mit zunehmendem Druck vor allem in die Zacken eines Regelsterns gedrückt, derart, dass sich dadurch die Durchtrittsöffnungen für das Wasser verkleinern. Je höher der Fließdruck steigt, desto stärker verformt sich der in den Durchflussmengenregler-Einheiten vorgesehene ringförmige Drosselkörper. Bei sinkendem Druck nimmt der ringförmige Drosselkörper allmählich wieder seine ursprüngliche Form an, wodurch die Wasserdurchtrittsöffnungen wieder größer werden.

Aus der US 2 950 063 A ist bereits ein sanitäres Durchflusselement bekannt, das aber ausschließlich als Strahlbelüfter ausgebildet ist und keinerlei Durchflussmengenregler-Einheit hat. Der aus US 2 950 063 A vorbekannte Strahlbelüfter weist eine Lochplatte als Strahlzerleger auf, die eine Anzahl von Durchflusslöchern hat und das durchströmende Wasser in eine entsprechende Anzahl von Einzelstrahlen aufteilen soll. Durch die durch die Lochplatte bewirkte Durchflussverengung wird die Fließgeschwindigkeit des Wassers im Bereich der Durchflusslöcher derart erhöht, dass sich auf der Abströmseite ein Unterdruck bildet, durch den Umgebungsluft durch die im Strahlreglergehäuse vorgesehene Belüftungsöffnungen in das Strahlreglergehäuse angesaugt wird. Um die angesaugte Luft mit dem durchströmenden Wasser gut durchmischen und um die Einzelstrahlen derart abbremsen zu können, dass ein perlend-weicher belüfteter Wasserstrahl entsteht, sind in der abströmseitigen Gehäuse-Stirnplatte Austrittsöffnungen vorgesehen, in denen jeweils ein kugelförmiger Prallkörper eingesetzt ist. Das aus dem vorbekannten Strahlregler ausströmende Wasser trifft auf den Prallkörpern auf und wird dabei abgebremst, aufgeteilt und mit Umgebungsluft durchmischt, bevor das Wasser anschließend aus den Austrittsöffnungen des vorbekannten Strahlbelüfters ausströmen kann. Der aus US 2 950 063 A vorbekannte Strahlbelüfter weist somit zwar kugelförmige Prallkörper auf, die sich jedoch nicht unter dem Wasserdruck verformen stollen und erst Recht nicht dazu bestimmt sind, das durchströmende Wasser unabhängig von Druckschwankungen auf eine definierte Durchflussmenge konstant einzuregeln.

Es besteht daher insbesondere die Aufgabe, ein sanitäres Durchflusselement der eingangs erwähnten Art zu schaffen, das eine Durchflussmengenregler-Einheit hat, mit der sich der angestrebte Maximalwert der Durchflussleistung vergleichsweise einfach und sicher festlegen lässt. Darüber hinaus besteht auch die Aufgabe, ein Verfahren zu schaffen, mit dem sich eine solches sanitäres Durchflusselement auf einfache Weise kostengünstig herstellen lässt.

Die erfindungsgemäße Lösung dieser Aufgabe besteht bei dem sanitären Durchflusselement der eingangs erwähnten Art darin, dass die Drosselkörper der Durchflussmengenregler kegel-, kegelstumpf- oder kugelförmig ausgebildet sind.

Das erfindungsgemäße sanitäre Durchflusselement weist eine Durchflussmengenregler-Einheit mit einem Trägerteil auf, das sich über den lichten Querschnitt eines Wasserauslasses oder dergleichen Fluidleitungsabschnitts erstreckt. In diesem Trägerteil sind zumindest zwei Einsetzöffnungen vorgesehen, in denen jeweils ein Durchflussmengenregler angeordnet ist. Die Einsetzöffnungen sind so voneinander beabstandet, dass die Durchflussmengenregler nicht beispielsweise koaxial ineinander angeordnet sind, sondern sich voneinander funktional getrennt ausgestalten lassen. Dies bedeutet auch, dass die Einsetzöffnungen Rand an Rand aneinander anliegen können. Jeder der auf dem Trägerteil der erfindungsgemäßen Durchflussmengenregler-Einheit vorgesehenen Durchflussmengenregler weist einen im Querschnitt außenumfangsseitig runden Drosselkörper aus elastischem Material auf, der kegel-, kegelstumpf- oder kugelförmig ausgebildet und als ein in sich geschlossener Formkörper ausgestaltet ist. Jeder dieser Drosselkörper begrenzt zwischen sich und einer die Einsetzöffnung umgrenzenden Umfangswandung einen Steuerspalt, wobei die Drosselkörper der Durchflussmengenregler unter dem Druck des durchströmenden Fluids eine derartige Komprimierung in Durchflussrichtung erfahren, dass diese Komprimierung eine Umfangsweitung der Drosselkörper bewirkt, die den die Durchflussleistung der Durchflussmengenregler bestimmenden Steuerspalt verengt. Da auf dem Trägerteil der im erfindungsgemäßen Durchflusselement vorgesehenen Durchflussmengenregler-Einheit mehrere Durchflussmengenregler mit jeweils einem Drosselkörper vorgesehen sind und da sich die Eigenschaftsschwankungen der Drosselkörper zumindest teilweise ausgleichen können, zeichnet sich das erfindungsgemäße Durchflusselement dadurch aus, dass sich der mit ihr angestrebte Maximalwert der Durchflussleistung vergleichsweise einfach und sicher festlegen lässt. Dabei können auf dem Trägerteil des erfindungsgemäßen Durchflusselementes auch mehr als zwei Einsetzöffnungen vorgesehen sein, von denen die bis auf zumindest zwei, jeweils mit einem Durchflussmengenregler ausgestatteten Einsetzöffnungen verbleibenden Einsetzöffnungen durch einen Stopfen verschlossen oder anderweitig genutzt sind.

Die im erfindungsgemäßen Durchflusselement vorgesehene Durchflussmengenregler-Einheit kann auch Bestandteil eines baukastenartigen oder modularen Regler-Systems sein, das die Bereitstellung der verschiedensten Durchflussmengenregler-Einheiten erlaubt. Dabei können auf dem Trägerteil auch eine Mehrzahl von Einsetzöffnungen vorgesehen sein, von denen zumindest zwei, aber nur eine Teilmenge von Einsetzöffnungen mit Durchflussmengenreglern bestückt sind. Von den mit Durchflussmengenreglern unbestückten Einsetzöffnungen kann zumindest eine Teilmenge offen und beispielsweise ohne den Drosselkörper oder mit Hilfe eines in der Einsetzöffnung vorzugsweise lösbar gehaltenen und insbesondere verrastbaren Stopfens verschlossen sein. Die Festlegung der Anzahl von gegebenenfalls auch unterschiedlich ausgestalteten Durchflussmengenreglern in der Durchflussmengenregler-Einheit des erfindungsgemäßen Durchflusselements und durch Addition der Durchflussleistungen jedes einzelnen verwendeten Durchflussmengenreglers lässt sich die maximale Gesamt-Durchflussleistung und gegebenenfalls auch die Regelcharakteristik einer aus dem Baukasten zusammengestellten Durchflussmengenregler-Einheit festlegen.

Um die Regelcharakteristik beispielsweise in bestimmten Druckbereichen oder die maximale Durchflussleistung der im erfindungsgemäßen Durchflusselement verwendeten Durchflussmengenregler-Einheit festlegen zu können, kann es vorteilhaft sein, wenn zumindest zwei der im Trägerteil vorgesehenen Durchflussmengenregler sich in ihren Regeleigenschaften voneinander unterscheiden.

Eine Ausführungsform gemäß der Erfindung sieht vor, dass die Drosselkörper von zumindest zwei der im Trägerteil vorgesehenen Durchflussmengenregler sich in den Regeleigenschaften voneinander unterscheiden. Bei dieser Ausführungsform können die Drosselkörper von zumindest zwei Durchflussmengenreglern beispielsweise aus unterschiedlichen elastomeren Materialien hergestellt sein. Zusätzlich oder stattdessen ist es auch möglich, dass die einen Steuerspalt begrenzenden Umfangswandungen von zumindest zwei der im Trägerteil vorgesehenen Durchflussmengenregler voneinander verschiedene Regelprofilierungen mit unterschiedlichen Regeleigenschaften aufweisen.

So kann mit einer individuellen Bestückung der Durchflussmengenregler-Einheit sowohl die Nenndurchflussleistung als auch das Toleranzfeld in der Montage definiert werden. Hierzu ist es beispielsweise möglich, dass neben den mengenregulierenden Drosselkörpern auch Stopfen zum Einsatz kommen, die von einem extrem schnell arbeitenden Montageroboter in die entsprechenden Einsetzöffnungen im Trägerteil der Durchflussmengenregler-Einheit eingesetzt werden. Somit ist zumindest eine Nenndurchflussleistung abstimmbar. In Abhängigkeit der Durchflussleistung einzelner Drosselkörper kann dann auch die Toleranzlage einer abgestimmten Nenndurchflussleistung eingestellt werden. Weist zum Beispiel ein einzelner Durchflussmengenregler eine Durchflussleistung von 0,1 1/min auf, so kann durch Hinzufügen oder Weglassen von einzelnen Drosselkörpern in den Einsetzöffnungen des Trägerteils das Toleranzfeld innerhalb einer Nenndurchflussklasse entsprechend beeinflusst werden. Es ist durchaus vorstellbar, dass Drosselkörper mit verschiedenen Durchmessern zum Aufbau und zur Herstellung einer Durchflussmengenregler-Einheit verwendet werden, wobei beispielsweise größere Drosselkörper zur Einstellung des Nenndurchflusses dienen, während kleinere Drosselkörper beziehungsweise kleinere Steuerspalte zur Beeinflussung des Toleranzfeldes bestimmt sind.

Wie bereits oben ausgeführt wurde, kann die maximale Durchflussleistung der Durchflussmengenregler-Einheit durch Auswahl verschiedener Durchflussmengenregler und insbesondere durch Auswahl verschiedener Drosselkörper und/oder Regelprofilierungen von zumindest zwei der auf dem Trägerteil vorgesehenen Durchflussmengenregler in einem Variationsspektrum festlegbar sein.

Eine bevorzugte Weiterbildung gemäß der Erfindung sieht vor, dass die maximale Durchflussleistung der Durchflussmengenregler-Einheit durch die Anzahl der mit einem Durchflussmengenregler ausgestatteten Einsetzöffnungen im Trägerteil festlegbar ist. Wird die maximale Durchflussleistung der Durchflussmengenregler-Einheit allein durch die Anzahl der mit einem Durchflussmengenregler ausgestatteten Einsetzöffnungen festgelegt, können die auf dem Trägerteil verwendeten Durchflussmengenregler jeweils auch im wesentlichen baugleich sein.

Eine bevorzugte Ausführungsform gemäß der Erfindung sieht vor, dass in dem Trägerteil zumindest drei Einsetzöffnungen vorgesehen sind, von denen in zumindest zwei Einsetzöffnungen ein Durchflussmengenregler angeordnet ist und von denen wenigstens eine Einsetzöffnung mittels eines Stopfens verschlossen ist.

Bevorzugt wird eine Ausführungsform, bei der das Trägerteil die Einsetzöffnungen aufweist, welche Einsetzöffnungen durch eine profilierte Umfangswandung umgrenzt sind; bei dieser Ausführungsform ist nur noch der aus elastischem Material bestehende Drosselkörper in die entsprechende Einsetzöffnung einzusetzen, um mit Hilfe dieser Einsetzöffnung und dem dazugehörigen Drosselkörper einen der benötigten Durchflussmengenregler fertigzustellen. Möglich ist aber auch, dass zumindest einer der auf dem Trägerteil vorgesehenen Durchflussmengenregler als ein den Drosselkörper und die zumindest eine profilierte Umfangswandung umfassender Reglereinsatz ausgestaltet ist, welcher Reglereinsatz in eine Einsetzöffnung eingesetzt ist. Durch Einsetzen der erforderlichen Anzahl von Durchflussmengenreglern in zumindest eine Teilmenge der auf dem Trägerteil vorgesehenen Einsetzöffnungen lässt sich die maximale Gesamt-Durchflussleistung der benötigten Durchflussmengenregler-Einheit verändern und festlegen.

Dabei ist es besonders vorteilhaft, wenn der Reglereinsatz lösbar oder auswechselbar in einer Einsetzöffnung eingesetzt ist.

Um den Drosselkörper sicher im Bereich der profilierten Umfangswandung halten und die Funktion des Durchflussmengenreglers einer Durchflussmengenregler-Einheit stets sicherstellen zu können, ist es zweckmäßig, wenn der Regelkern an seinem freien Regelkern-Endbereich zumindest einen Sicherungsvorsprung hat, der den Drosselkörper auf den Regelkern in axialer Richtung sichert.

Eine besonders platzsparende Ausführungsform gemäß der Erfindung sieht vor, dass das Trägerteil plattenförmig ausgebildet ist. Zu dem gleichen Zweck kann es vorteilhaft sein, wenn auch die Reglereinsätze jeweils scheibenförmig ausgebildet sind.

Um beispielsweise den aus einer sanitären Auslaufarmatur ausströmenden Wasserstrahl mit Hilfe der Durchflussmengenregler-Einheit nicht nur druckunabhängig auf eine festgelegte Durchflussmenge pro Zeiteinheit einzuregeln, sondern um das austretende Wasser auch zu einem homogenen, nicht-spritzenden und gegebenenfalls perlend-weichen Wasserstrahl zu formen, kann es zweckmäßig sein, wenn der Durchflussmengenregler-Einheit ein Strahlregler oder zumindest ein den Wasserstrom in eine Vielzahl von Einzelstrahlen aufteilender Strahlzerleger in Strömungsrichtung nachgeschaltet ist.

Eine bevorzugte Weiterbildung gemäß der Erfindung sieht vor, dass das Trägerteil auch als ein Strahlzerleger eines Strahlreglers ausgebildet ist, welcher Strahlzerleger das zuströmende Wasser in einer Mehrzahl von Einzelstrahlen aufteilt. Eine solche weiterbildende Ausführungsform, bei der das Trägerteil gleichzeitig auch als der Strahlzerleger eines Strahlreglers ausgebildet ist, erlaubt eine besonders kompakte und flache Ausgestaltung des erfindungsgemäßen Durchflusselementes.

Dabei kann der in das erfindungsgemäße Durchflusselement integrierte Strahlregler als unbelüfteter oder auch als belüfteter Strahlregler ausgebildet sein.

Eine bevorzugte Ausführungsform gemäß der Erfindung sieht vor, dass dem Strahlzerleger des Strahlreglers zumindest eine strahlregulierende oder strahlformende Gitter- oder Netzstruktur in Strömungsrichtung nachgeschaltet ist, welche Gitter- oder Netzstruktur vorzugsweise durch mit an Kreuzungsknoten kreuzenden Stegen gebildet ist.

Möglich ist es aber auch, dass die Durchflussmengenregler-Einheit und der Strahlregler beziehungsweise Strahlzerleger voneinander beabstandet sind.

Da das Durchflusselement vergleichsweise flach ausgestaltet sein kann, ist es auch möglich, dass die Durchflussmengenregler-Einheit und gegebenenfalls der Strahlregler beziehungsweise Strahlzerleger in einem vorzugsweise gemeinsamen Einsetzgehäuse vorgesehen sind.

Bei dem Verfahren der eingangs erwähnten Art besteht die erfindungsgemäße Lösung in den Merkmalen des Anspruchs 16. Das erfindungsgemäße Verfahren sieht zur Herstellung des oben beschriebenen sanitären Durchflusselementes vor, dass die für eine festgelegte maximale Durchflussmenge pro Zeiteinheit benötigte Anzahl der mit einem Durchflussmengenregler beziehungsweise einem Drosselkörper auszustattenden Einsetzöffnungen durch Messung der Durchflussleistung und in Abhängigkeit davon durch Einsetzen von Durchflussmengenreglern beziehungsweise Drosselkörpern in weitere Einsetzöffnungen oder durch Entnahme von weiteren Durchflussmengenreglern beziehungsweise Drosselkörpern aus Einsetzöffnungen sowie durch Verschließen der für einen Durchflussmengenregler nicht benötigten Einsetzöffnungen im Trägerteil ermittelt wird.

Die Herstellung und Montage solcher Durchflusselemente kann ähnlich wie die Bestückung einer Leiterplatte mit Komponenten erfolgen, so dass eine simultane Bestückung der Vielzahl der Komponenten nicht zwingend erforderlich ist, jedoch auch nicht ausgeschlossen werden soll. So ist es beispielsweise möglich, dass das Trägerteil sequentiell mit Durchflussmengenreglern beziehungsweise Drosselkörpern beschickt wird. Eine andere Verfahrensweise sieht demgegenüber vor, dass die in den Einsetzöffnungen des Trägerteil benötigten Durchflussmengenregler beziehungsweise Drosselkörper sowie gegebenenfalls auch die zum Verschließen der nicht benötigten Einsetzöffnungen vorgesehenen Blindstopfen im wesentlichen simultan auf dem Trägerteil montiert werden. So ist es möglich, dass in einer entsprechenden Montagevorbereitungsstation die einzusetzenden Komponenten für die gegebenenfalls mit einem Strahlregler kombinierte Durchflussmengenregler-Einheit an den jeweiligen Positionen bereitgestellt werden, um dann simultan in einem Arbeitsgang auf dem Trägerteil der im erfindungsgemäßen Durchflusselement verwendeten Durchflussmengenregler-Einheit platziert beziehungsweise in dieses Trägerteil hinein montiert werden zu können. Das erfindungsgemäße Verfahren zeichnet sich dadurch aus, dass man extrem flexibel individuelle Durchflussmengen in der Durchflussmengenregler-Einheit des Durchflusselementes einstellen kann beziehungsweise extrem flexibel auf die stets vorhandenen Durchflussschwankungen, die aufgrund von Schwankungen der Werkstoffeigenschaften oder der Maße entstehen, reagieren kann.

Dabei sieht eine besonders vorteilhafte Weiterbildung des erfindungsgemäßen Verfahrens vor, dass die Herstellung in einen Regelkreis integriert ist, derart, dass die zur Herstellung einer zuvor montierten Durchflussmengenregler-Einheit benötigte Anzahl von Durchflussmengenreglern beziehungsweise Drosselkörpern zunächst auch bei der Herstellung der nachfolgend montierten Durchflussmengenregler-Einheit eingesetzt wird, um in nachfolgenden Verfahrensschritten die maximale Durchflussmenge pro Zeiteinheit der nachfolgend montierten Durchflussmengenregler-Einheit zu messen und in Abhängigkeit davon durch Einsetzen von Durchflussmengenreglern beziehungsweise Drosselkörpern in weitere Einsetzöffnungen oder durch Entnahme von weiteren Durchflussmengenreglern beziehungsweise Drosselkörpern aus Einsetzöffnungen sowie durch Verschließen der für einen Durchflussmengenregler nicht benötigten Einsetzöffnungen im Trägerteil endgültig festzulegen.

Weiterbildungen gemäß der Erfindung ergeben sich aus der Beschreibung in Verbindung mit den Ansprüchen sowie der Zeichnung. Nachstehend wird die Erfindung anhand bevorzugter Ausführungsbeispiele noch näher beschrieben.

Es zeigt:
- Fig. 1: ein aus zuströmseitigem Vorsatzsieb, abströmseitigem Strahlzerleger und zwischengeschalteter Durchflussmengenregler-Einheit bestehendes sanitäres Durchflusselement in einer perspektivischen Teil-Schnittdarstellung, wobei die Durchflussmengenregler-Einheit ein scheibenförmiges Trägerteil mit einer Vielzahl von Einsetzöffnungen aufweist, in welchen Einsetzöffnungen zur Bildung jeweils eines Durchflussmengenreglers ein im Querschnitt runder und hier kugelförmiger Drosselkörper aus elastischem Material eingesetzt ist,
- Fig. 2: das Durchflusselement aus Figur 1 in einer teilgeschnittenen perspektivischen Draufsicht auf die Zuströmseite,
- Fig. 3: das Durchflusselement aus Figur 1 und 2 in einer auseinandergezogenen perspektivischen Einzelteildarstellung mit Blick in Richtung auf die Abströmseite dieser Baugruppe,
- Fig. 4a bis 4d: einzelne Verfahrensschritte zur Herstellung und Montage des in den Figuren 1 bis 3 gezeigten Durchflusselementes,
- Fig. 5: ein mit Figur 1 bis 4 vergleichbares und in einer perspektivischen Teil-Schnittdarstellung gezeigtes Durchflusselement in einer vereinfachten Ausführung, wobei einzelne Einsetzöffnungen ihrer Durchflussmengenregler-Einheit mit Hilfe jeweils eines Stopfens flüssigkeitsdicht verschlossen sind,
- Fig. 6: ein mit Fig. 5 vergleichbares Durchflusselement, das ebenfalls in einer perspektivischen Teil-Schnittdarstellung gezeigt ist,
- Fig. 7: das Durchflusselement aus Fig. 6, dessen als Strahlzerleger ausgebildetes Trägerteil hier in das Strahlreglergehäuse eines Strahlreglers integriert ist, wobei dem als Strahlzerleger ausgebildeten Trägerteil mehrere strahlregulierende oder strahlformende Gitter-, Netz- oder dergleichen Lochstrukturen in Strömungsrichtung nachgeschaltet sind, von denen zumindest eine zuströmseitige Gitter-, Netz- oder dergleichen Lochstruktur von der Zuströmseite des Strahlreglergehäuses aus in dessen Gehäuseinnenraum einsetzbar ist,
- Fig. 8: einen mit Fig. 7 vergleichbar ausgestalteten Strahlregler, bei dem dem als Strahlzerleger ausgebildeten Trägerteil des Durchflusselementes nur eine Lochstruktur in Strömungsrichtung nachgeschaltet ist, die die an das Strahlreglergehäuse einstückig angeformte Auslaufstirnseite des Strahlreglers bildet, wobei diese Lochstruktur hier wabenzellenartig ausgebildete Durchflusslöcher hat,
- Fig. 9a bis Fig. 9c: einzelne Verfahrensschritte zur Herstellung und Montage des in Fig. 6 gezeigten Durchflusselementes, und
- Fig. 10: ein mit Fig. 1 bis 4, 6 und 9 vergleichbares sanitäres Durchflusselement, bei welchem das Trägerteil der Durchflussmengenregler-Einheit gleichzeitig auch als Strahlzerleger eines Strahlreglers ausgebildet ist.

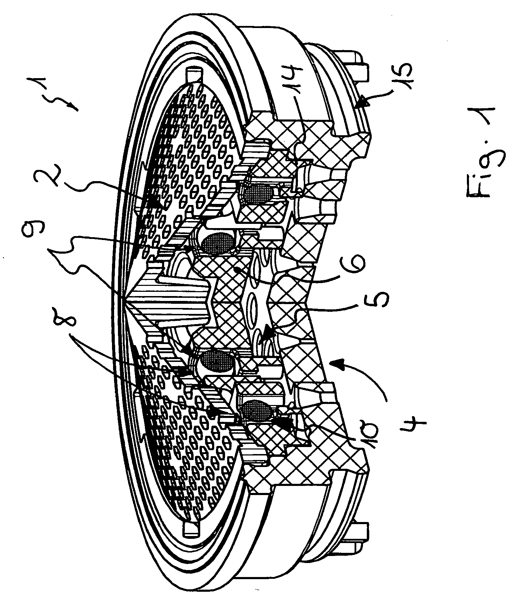

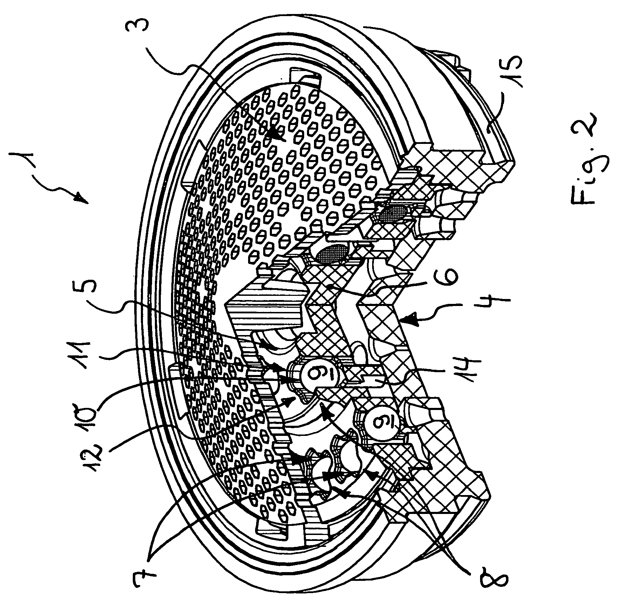

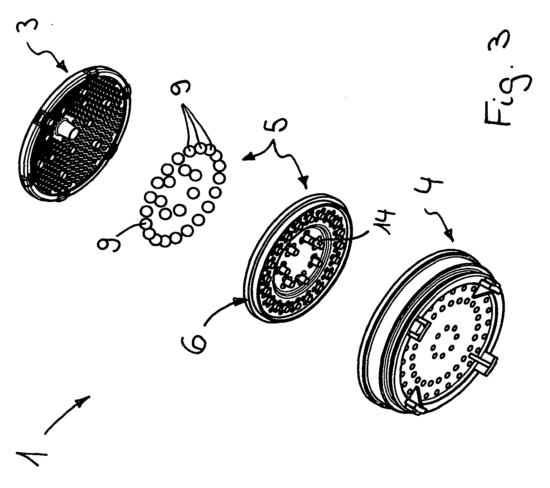

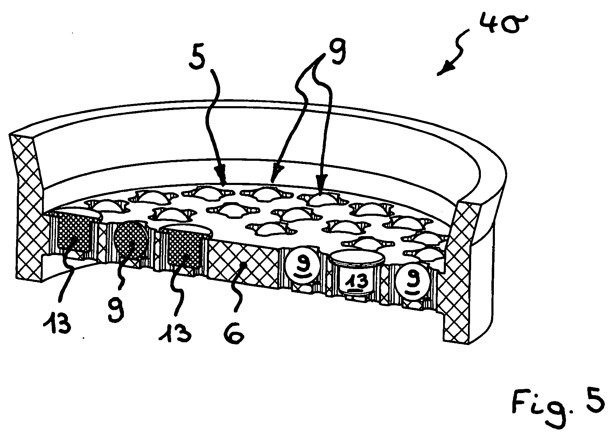

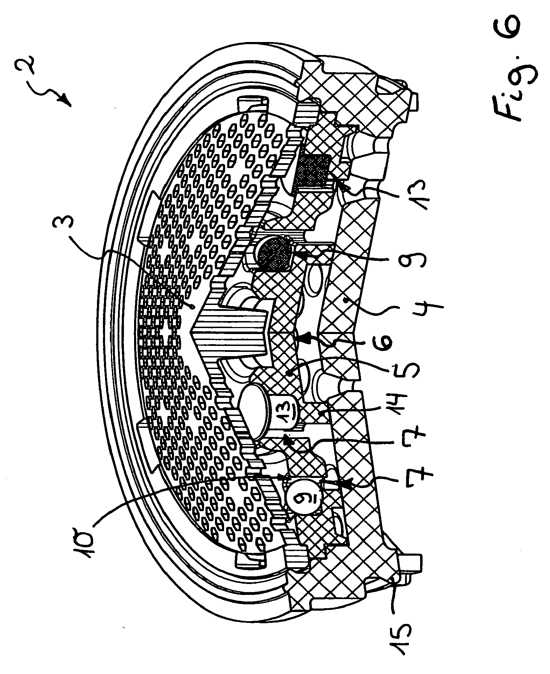

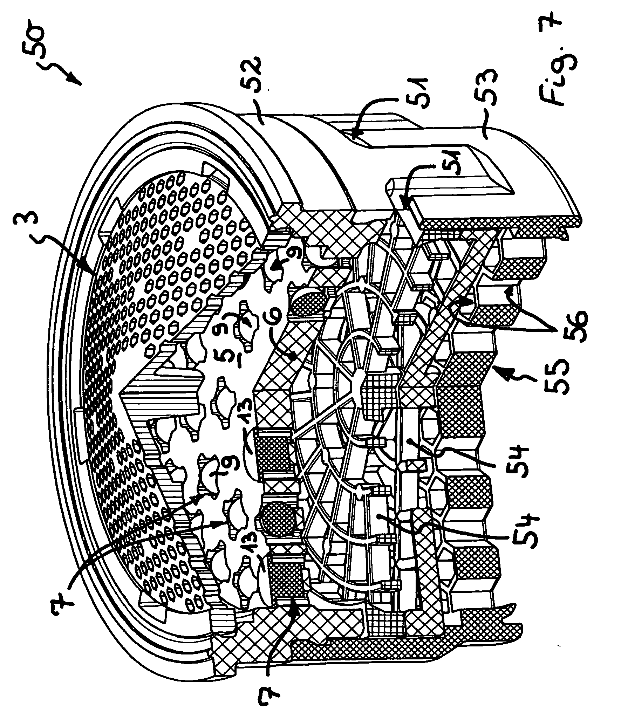

In den Figuren 1 bis 10 ist ein sanitäres Durchflusselement in fünf Ausführungen 1, 2, 30, 40 und 50 dargestellt. Die Baugruppen 1, 2, 30, 40 und 50 weisen eine Durchflussmengenregler-Einheit 5 auf, wobei der Durchflussmengenregler-Einheit 5 der Baugruppen 1, 2, 30 und 50 ein zuströmseitiges Vorsatzsieb vorgeschaltet ist. Das zuströmseitige und hier sich in Durchströmrichtung konisch erweiternde Vorsatzsieb 3 der Baugruppen 1, 2, 30, 50 soll die im Wasser eventuell mitgeführten Schmutzpartikel aussieben und zurückhalten, damit diese sich nicht in den nachfolgenden Funktionseinheiten festsetzen und dort zu funktionsbeeinträchtigenden Störungen führen können. Während der Durchflussmengenregler-Einheit der Baugruppen 1, 2 in Strömungsrichtung ein Strahlzerleger 4 folgt, ist die Baugruppe 40 gemäß Fig. 5 lediglich als Durchflussmengenregler-Einheit vorgesehen. Demgegenüber ist bei den, in den Fig. 7, 8 und 10 dargestellten Baugruppen 30, 50 das Durchflusselement 5 selbst als Strahlzerleger eines Strahlreglers ausgestaltet.

Aus einem Vergleich der Fig. 1 bis 4, 6 und 9 wird deutlich, dass der abströmseitige Strahlzerleger 4 - wie hier - als Lochplatte oder aber auch als Diffusor ausgebildet sein kann. Dieser Strahlzerleger 4 soll den durchfließenden Wasserstrom in eine Vielzahl von Einzelstrahlen aufteilen. Mit Hilfe der in den Baugruppen 1, 2, 30, 40, 50 vorgesehenen Durchflussmengenregler-Einheit 5 wird das durchströmende Wasser druckunabhängig auf eine maximale Durchflussmenge pro Zeiteinheit eingeregelt.

Jede Durchflussmengenregler-Einheit 5 der Baugruppen 1, 2, 30, 40, 50 weist ein Trägerteil 6 auf, das sich über den lichten Querschnitt des flüssigkeitsführenden Fluidleitungsabschnitts erstreckt. Das Trägerteil 6 hat zumindest zwei voneinander beabstandete Einsetzöffnungen 7, in denen jeweils ein Durchflussmengenregler 8 angeordnet ist. Jeder Durchflussmengenregler 8 weist einen im Querschnitt außenumfangsseitig runden Drosselkörper 9 aus elastischem Material auf, der sich unter dem Druck des durchströmenden Mediums elastisch verformt. Die im Querschnitt außenumfangsseitig runden Drosselkörper 9 sind als ein allseits in sich geschlossener Formkörper ausgebildet und können beispielsweise kegelförmig oder kegelstumpfförmig ausgebildet sein. Da die Drosselkörper 9 als allseits in sich geschlossener Formkörper ausgebildet sind, weisen sie beispielsweise keine Ringöffnung auf. Die Drosselkörper 9, die im Querschnitt außenumfangsseitig rund ausgebildet sind, sind aus elastischem Material ausgestaltet und begrenzen zwischen sich und einer die Einsetzöffnung umgrenzenden Umfangswandung einen Steuerspalt 10. Die im Bereich der Steuerspalte 10 erzeugten Einzelstrahlen werden derart beschleunigt, dass eine Druckdifferenz entsteht. Unter dem Druck des durchströmenden Fluids erfahren die Drosselkörper 9 der Durchflussmengenregler 8 eine derartige Komprimierung in Durchflussrichtung, dass diese Komprimierung gleichzeitig eine Umfangsweitung der Drosselkörper 9 bewirkt, die dem die Durchflussleistung der Durchflussmengenregler 8 bestimmenden Steuerspalt 10 verengt. Zwar kann die eine Einsetzöffnung 7 umgrenzende Umfangswandung eventuell auch glattwandig sein -, jedoch wird die hier dargestellte Ausführungsform bevorzugt, bei welcher an der Umfangswandung der einem Drosselkörper 9 zugeordneten Einsetzöffnung 7 eine Regelprofilierung vorgesehen ist, die hier durch in Durchströmrichtung orientierte und vorzugsweise wellenförmig ineinander übergehende Ein- und Ausformungen 11, 12 gebildet werden. Der unter dem Druck des durchströmenden Fluids elastisch nachgebende Drosselkörper 9 wird mit zunehmendem Druck derart verformt, dass er sich zunehmend in die Regelprofilierung einformt, den Steuerspalt 10 verengt und die maximale Durchflussmenge pro Zeiteinheit druckunabhängig auf ein festgelegtes Maß begrenzt und einregelt.

Möglich ist es, dass sich die Durchflussmengenregler 8 in ihrer Durchflussleistung und/oder in ihren Regeleigenschaften voneinander unterscheiden. Bevorzugt werden jedoch die hier dargestellten Ausführungen, in denen die Drosselkörper 9 der in der Durchflussmengenregler-Einheit 5 vorgesehenen Durchflussmengenregler 8 zumindest im Wesentlichen baugleich sind.

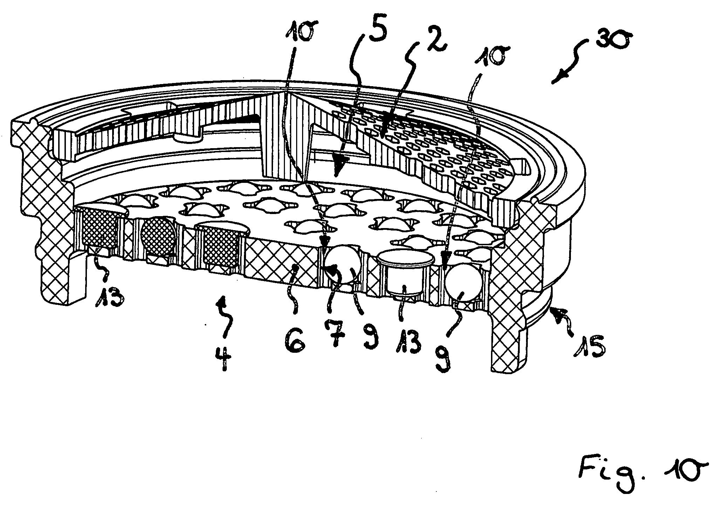

Die maximale Durchflussleistung der Durchflussmengenregler-Einheit 5 ist hier durch die Anzahl der mit einem Durchflussmengenregler 8 und speziell mit einem Drosselkörper 9 ausgestatteten Einsetzöffnungen 7 festlegbar. Während bei den in Fig. 1 bis 4 und in Fig. 10 dargestellten Durchflusselementen 1, 30 in jede Einsetzöffnung 7 des Trägerteils 6 ein zur Vervollständigung und Funktionsbereitstellung jeweils eines Durchflussmengenreglers 8 vorgesehener Drosselkörper 9 eingesetzt ist, weisen die in den Fig 5 bis 10 dargestellten Baugruppen 2, 30, 40 und 50 in ihrer Durchflussmengenregler-Einheit 5 zumindest drei Einsetzöffnungen 7 auf, von denen in zumindest zwei Einsetzöffnungen 7 ein Durchflussmengenregler 8 vorgesehen ist und von denen wenigstens eine Einsetzöffnung 7 mittels eines Stopfens 13 flüssigkeitsdicht verschlossen ist.

Bei zusammenschauender Betrachtung der in den Figuren 1 bis 10 dargestellten und zur Herstellung der Baugruppen 1, 2, 30, 40, 50 und ihrer Durchflussmengenregler-Einheiten 5 erforderlichen Verfahrensschritte wird deutlich, dass die Drosselkörper 9 mit Hilfe eines vorzugsweise extrem schnell arbeitenden Montageroboters in die Einsetzöffnungen 7 des Trägerteils 6 eingesetzt werden können. Um die Nenndurchflussleistung nach Bedarf abstimmen zu können, ist bei der in Figur 5 bis 10 gezeigten Durchflussmengenregler-Einheit 5 vorgesehen, dass die zum Erreichen der Nenndurchflussleistung erforderlichen Einsetzöffnungen 7 mit einem Drosselkörper 9 bestückt werden, während die auf dem Trägerteil 6 darüber hinaus vorgesehenen Einsetzöffnungen 7 jeweils mit einem Stopfen 13 flüssigkeitsdicht zu verschließen sind. In Abhängigkeit der Durchflussleistung der einzelnen Durchflussmengenregler 8 kann auch die Toleranzlage einer abgestimmten Nenndurchflussleistung eingestellt werden; zeichnet sich beispielsweise ein gegebenenfalls auch kleiner ausgestalteter und in eine dementsprechend kleinere Einsetzöffnung 7 einsetzbarer Drosselkörper 9 für einen Durchfluss von 0,1 l/min aus, so kann durch Hinzufügen und Weglassen einzelner solcher Drosselkörper 9 auch das Toleranzfeld innerhalb einer Nenndurchflussklasse abgestimmt werden.

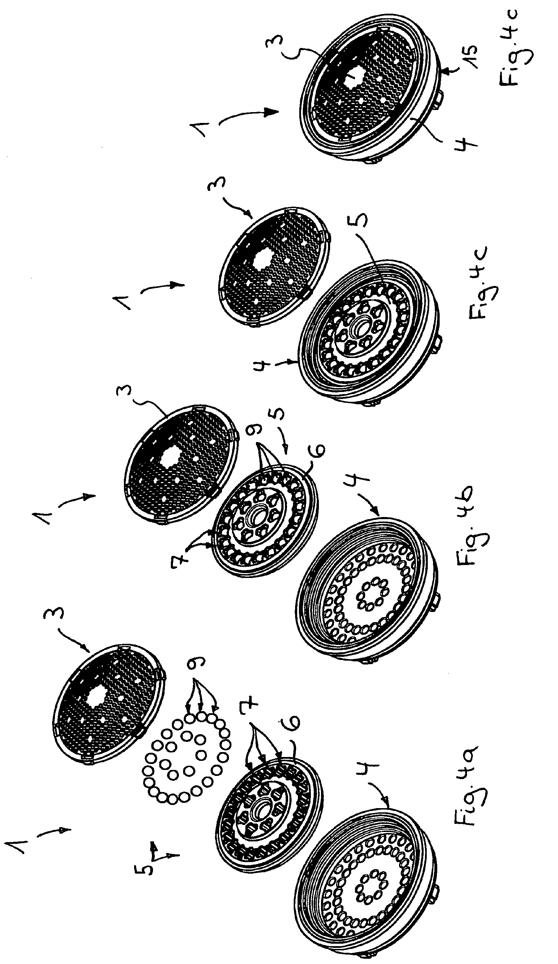

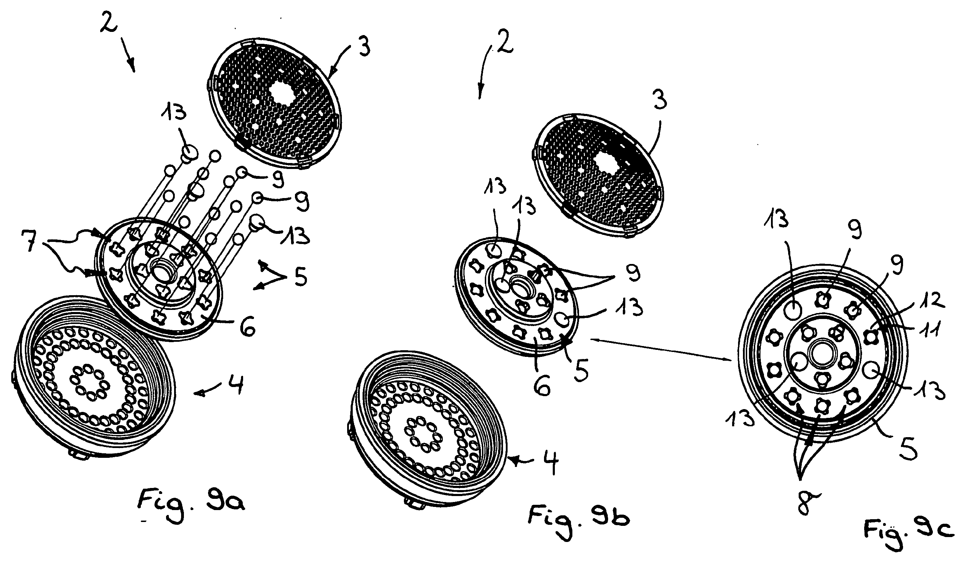

Möglich ist, dass das Trägerteil 6 einer Durchflussmengenregler-Einheit 5 sequentiell mit den hier kugelförmigen Drosselkörpern 9 und gegebenenfalls mit dem Stopfen 13 bestückt werden. In den Figuren 4 und 9 ist jedoch angedeutet, dass diese Bestandteile hier simultan in die Einsetzöffnungen 9 des Trägerteils 6 eingesetzt werden sollen.

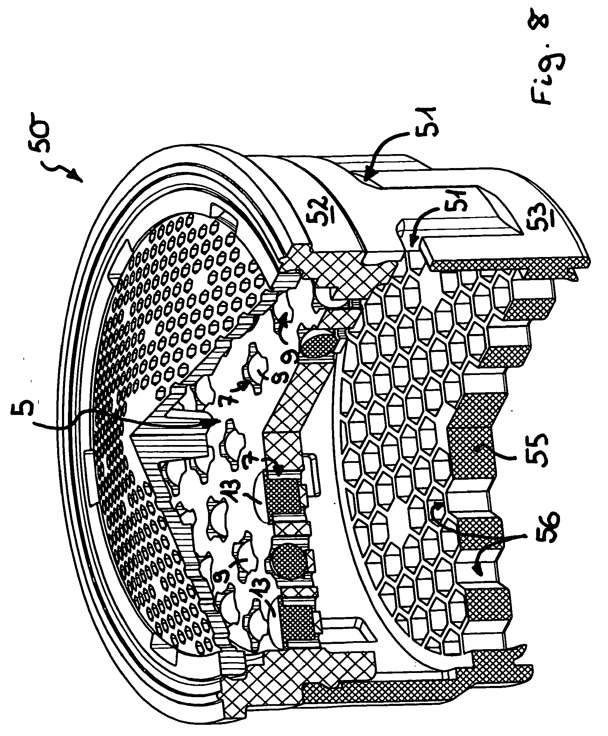

In den Figuren 1 bis 4 und 9 ist erkennbar, dass den Durchflussmengenregler-Einheiten 5 der Durchflusselemente 1, 2, ein Strahlzerleger 4 nachgeschaltet ist. Dieser Strahlzerleger 4 ist bei den Durchflusselementen 1, 2 gemäß den Figuren 1 bis 4 und 9 topf- oder pfannenförmig ausgebildet, wobei der Topf- oder Pfannenboden als Lochplatte ausgestaltet ist, die eine Vielzahl von Durchflusslöchern aufweist, welche das durchströmende Wasser in eine Vielzahl von Einzelstrahlen aufzuteilen haben. In das Innere des Strahlzerlegers 4 ist die scheibenförmige Durchflussmengenregler-Einheit 5 einsetzbar, bevor das Vorsatzsieb 3 am zuströmseitigen Umfangsrand des Strahlzerlegers 4 vorzugsweise lösbar verrastet wird. Auf der Abströseite des Trägerteil 6 sind hier stiftförmig vorstehende Abstandhalter 14 vorgesehen, die einen ausreichenden Abstand zwischen der Durchflussmengenregler-Einheit 5 und der Lochplatte des Strahlzerlegers 4 sicherstellen. Die Drosselkörper 9 sind in die Einsetzöffnungen 7 des Trägerteils 6 gegebenenfalls mit oder ohne radiales beziehungsweise axiales Spiel, aber jedenfalls unverlierbar eingesetzt. In den Fig. 7, 8 und 10 ist erkennbar, dass auch das Durchflusselement 5 selbst als Strahlzerleger eines Strahlreglers ausgestaltet sein kann. Dabei regelt das Durchflusselement 5 eines solchen, besonders kompakt auszugestaltenden Strahlreglers nicht nur dessen Durchflussleistung, d.h. das Durchflussvolumen pro Zeiteinheit druckabhängig auf einem festgelegten Maximalwert ein, - vielmehr werden die in den jeweils mit einem Durchflussmengenregler ausgestatteten Einsetzöffnungen 7 des Trägerteils 6 erzeugten Einzelstrahlen derart beschleunigt, dass auf der Abströmseite der Durchflusselemente 5 ein Unterdruck entsteht, der zum Einsaugen von Umgebungsluft in das Gehäuseinnere des Strahlreglergehäuses genutzt werden kann. Diese Umgebungsluft wird über die in Fig. 7 und 8 erkennbaren und am Gehäuseumfang des Strahlreglergehäuses vorgesehenen Belüftungsöffnungen 51 in das Strahlreglergehäuse eingezogen und mit den vom Strahlzerleger kommenden Einzelstrahlen derart vermischt, dass ein homogener, nichtspritzender und perlend-weicher Wasserstrahl ensteht.

Während bei den in Figur 1 bis 4, 6 und 9 gezeigten Durchflusselementen 1, 2 die Durchflussmengenregler-Einheit 5 und der Strahlzerleger 4 des Strahlreglers voneinander beabstandet sind, ist bei dem in Figur 7, 8 und 10 gezeigten Durchflusselement 30, 50 das Trägerteil 6 auch als Strahlzerleger 4 eines Strahlreglers ausgebildet, welcher Strahlzerleger 4 das zuströmende Wasser auch hier in eine, der Anzahl der mit einem Durchflussmengenregler 8 ausgestatteten Einsetzöffnungen 7 entsprechende Anzahl von Einzelstrahlen aufzuteilen hat.

Wie das in Fig. 7 gezeigte Ausführungsbeispiel zeigt, kann den Strahlzerlegern 4 der die Durchflusselemente 1, 2, 30 und 50 aufweisenden Strahlreglern zumindest eine strahlregulierende oder strahlformende Gitter- oder Netzstruktur nachgeschaltet sein, welche aus sich an Kreuzungsknoten kreuzenden Stegen gebildet ist. Von diesen Gitter- oder Netzstrukturen kann zumindest eine Gitter- oder Netzstruktur als scheibenförmiges Einsetzteil 52 ausgestaltet sein, welches Einsetzteil 52 in einen hülsenförmigen Gehäuseabschnitt einsetzbar ist. Der in den Fig. 7 und 8 dargestellte Strahlregler weist daher ein Strahlreglergehäuse auf, dessen zuströmseitiges, das Durchflusselement 50 aufweisendes Gehäuseteil 53 mit dem abströmseitigen Gehäuseteil 54 lösbar verrastbar ist und in dessen abströmseitiges Gehäuseteil 54 die scheibenförmigen Einsetzteile 52 eingesetzt werden können.

Demgegenüber weist das in Fig. 8 gezeigte Ausführungsbeispiel nur eine abströmseitige Lochstruktur 55 mit wabenzellenartig ausgestalteten Durchflusslöchern 56 auf, welche Lochstruktur 55 die an das Strahlreglergehäuse einstückig angeformte Auslaufstirnseite des Strahlreglers bildet. Eine solche Lochstruktur 55 mit wabenzellenartig ausgestalteten Durchflusslöchern 56 ist auch bei dem in Fig. 7 gezeigten Ausführungsbeispiel vorgesehen.

Die in den Figuren 1 bis 4 und 6 bis 10 gezeigten Durchflusselemente 1, 2, 30 und 50 können die Zuströmseite einer Einsetzpatrone bilden, die im Wasserauslauf einer sanitären Auslaufarmatur montierbar ist. In dem anhand der Fig. 7 und 8 gezeigten Ausführungsbeispiel können dem als Patronengehäuse ausgebildeten Strahlreglergehäuse der Einsetzpatrone eine Strahlreguliereinrichtung und/oder ein Strömungsgleichrichter vorgesehen sein, die den Strahlzerleger 4 zu einem gegebenenfalls auch belüfteten Strahlregler vervollständigen. Um die Baugruppen an einem solchen Patronengehäuse gegebenenfalls auch lösbar befestigen zu können, ist am Trägerteil 6 abströmseitig wenigstens ein Rastmittel 15 vorgesehen, das mit einem Gegenrastmittel am vorzugsweise hülsenförmigen Patronengehäuse oder am Gehäuseabschnitt zusammenwirkt.

## Patentansprüche

1. Sanitäres Durchflusselement (1, 2, 30), das eine Durchflussmengenregler-Einheit (5) mit einem, sich über den lichten Querschnitt eines Fluidleitungsabschnitts erstreckenden Trägerteil (6) aufweist, welches Trägerteil (6) zumindest zwei voneinander beabstandete Einsetzöffnungen (7) hat, in denen jeweils ein Durchflussmengenregler (8) angeordnet ist, wobei jeder Durchflussmengenregler (8) einen im Querschnitt außenumfangsseitig runden Drosselkörper (9) aus elastischem Material aufweist, der zwischen sich und einer die Einsetzöffnung (7) umgrenzenden Umfangswandung einen Steuerspalt (10) begrenzt, wobei die Drosselkörper unter dem Druck des durchströmenden Fluids eine derartige Komprimierung in Durchflussrichtung erfahren, dass diese Komprimierung eine Umgangsweitung der Drosselkörper (9) bewirkt, die den die Durchflussleistung der Durchflussmengenregler (8) bestimmenden Steuerspalt (10) verengt, **dadurch gekennzeichnet, dass** die Drosselkörper (9) der Durchflussmengenregler (8) kegel-, kegelstumpf- oder kugelförmig ausgebildet sind.

2. Durchflusselement nach Anspruch 1, **dadurch gekennzeichnet, dass** zumindest zwei der im Trägerteil (6) vorgesehenen Durchflussmengenregler (8) sich in ihren Regeleigenschaften voneinander unterscheiden.

3. Durchflusselement nach Anspruch 1 oder 2, **dadurch gekennzeichnet, dass** die Drosselkörper (9) von zumindest zwei der im Trägerteil (6) vorgesehenen Durchflussmengenregler (8) sich in ihren Regeleigenschaften voneinander unterscheiden.

4. Durchflusselement nach einem der Ansprüche 1 bis 3, **dadurch gekennzeichnet, dass** die einen Steuerspalt (10) begrenzenden Umfangswandungen von zumindest zwei der im Trägeteil (6) vorgesehenen Durchflussmengenregler (8) voneinander verschiedene Regelprofilierungen mit unterschiedlichen Regeleigenschaften aufweisen.

5. Durchflusselement nach einem der Ansprüche 1 bis 4, **dadurch gekennzeichnet, dass** die maximale Dürchflussleistung der Durchflussmengenregler-Einheit (5) durch Auswahl verschiedener Durchflussmengenregler (8) und insbesondere durch Auswahl verschiedener Drosselkörper (9) und/oder Regelprofilierungen für zumindest zwei der auf dem Trägerteil (6) vorgesehenen Durchflussmengenregler (8) in einem Variationsspektrum festlegbar ist.

6. Durchflusselement nach einem der Ansprüche 1 bis 5, **dadurch gekennzeichnet, dass** die maximale Durchflussleistung der Durchflussmengenregler-Einheit (5) durch die Anzahl der mit einem Durchflussmengenregler (8) ausgestatteten Einsetzöffnungen (7) im Trägerteil (6) festlegbar ist.

7. Durchflusselement nach einem der Ansprüche 1 bis 6, **dadurch gekennzeichnet, dass** in dem Trägerteil (6) zumindest drei Einsetzöffnungen (7) vorgesehen sind, von denen in zumindest zwei Einsetzöffnungen (7) ein Durchflussmengenregler (8) angeordnet ist und von denen wenigstens eine Einsetzöffnung (7) mittels einem Stopfen (13) verschlossen ist.

8. Durchflusselement nach einem der Ansprüche 1 bis 7, **dadurch gekennzeichnet, dass** zumindest einer der auf dem Trägerteil (6) vorgesehenen Durchflussmengenregler (8) als ein den Drosselkörper (9) und die zumindest eine profilierte Umfangswandung umfassender Reglereinsatz ausgestaltet ist, welcher Reglereinsatz in einer Einsetzöffnung (7) eingesetzt ist.

9. Durchflusselement nach Anspruch 8, **dadurch gekennzeichnet, dass** der Drosselkörper (9) oder der Reglereinsatz lösbar oder auswechselbar in eine Einsetzöffnung (7) eingesetzt ist.

10. Durchflusselement nach einem der Ansprüche 1 bis 9, **dadurch gekennzeichnet, dass** der Durchflussmengenregler-Einheit (5) ein Strahlregler oder zumindest ein den Wasserstrom in eine Vielzahl von Einzelstrahlen aufteilender Strahlzerleger (4) in Strömungsrichtung nachgeschaltet ist.

11. Durchflusselement nach einem der Ansprüche 1 bis 10, **dadurch gekennzeichnet, dass** das Trägerteil (6) auch als ein Strahlzerleger (4) eines Strahlreglers ausgebildet ist, welcher Strahlzerleger (4) bei Gebrauch das zuströmende Wasser in eine Mehrzahl von Einzelstrahlen aufteilt.

12. Durchflusselement nach Anspruch 11, **dadurch gekennzeichnet, dass** dem Strahlzerleger (4) des Strahlreglers zumindest eine strahlregulierende oder strahlformende Gitter- oder Netzstruktur in Strömungsrichtung nachgeschaltet ist.

13. Durchflusselement nach einem der Ansprüche lobis 12, **dadurch gekennzeichnet, dass** die Durchflussmengenregler-Einheit (5) und der Strahlregler beziehungsweise Strahlzerleger (4) voneinander beabstandet sind.

14. Durchflusselement nach einem der Ansprüche 10bis 13, **dadurch gekennzeichnet, dass** die Durchflussmengenregler-Einheit (5) und gegebenenfalls der Strahlregler beziehungsweise Strahlzerleger (4) in einem gemeinsamen Einsetz- oder Patronengehäuse vorgesehen sind.

15. Verfahren zur Herstellung eines Durchflusselementes gemäß einem der Ansprüche 1 bis 14, **dadurch gekennzeichnet, dass** die für eine festgelegte maximale Durchflussmenge pro Zeiteinheit benötigte Anzahl der mit einem Durchflussmengenregler (8) beziehungsweise einem Drosselkörper (9) auszustattenden Einsetzöffnungen (7) durch Messung der Durchflussleistung und in Abhängigkeit davon durch Einsetzen von Durchflussmengenreglern (8) beziehungsweise Drosselkörpern (9) in weitere Einsetzöffnungen (7) oder durch Entnahme von weiteren Durchflussmengenreglern (8) beziehungsweise Drosselkörpern (9) aus Einsetzöffnungen (7) sowie durch Verschließen der für einen Durchflussmengenregler (8) nicht benötigten Einsetzöffnungen (7) im Trägerteil (6) ermittelt wird.

## Claims

1. Sanitary flow element (1, 2, 30) which has a flow rate regulator unit (5) having a carrier part (6) which extends over the clear cross-section of a fluid line section and which carrier part (6) has at least two mutually spaced-apart insertion openings (7) in which in each case one flow rate regulator (8) is arranged, wherein each flow rate regulator (8) has a restrictor (9) which is round on an outer circumferential side in cross-section, consists of elastic material and delimits a control gap (10) between itself and a circumferential wall bounding the insertion opening (7), wherein the restrictors are subjected to compression in a flow direction under the pressure of the fluid flowing through, such that this compression causes a circumferential widening of the restrictors (9) which narrows the control gap (10) which determines the flow capacity of the flow rate regulators (8), **characterised in that** the restrictors (9) of the flow rate regulators (8) are formed in a conical, frustoconical or spherical manner.

2. Flow element as claimed in claim 1, **characterised in that** at least two of the flow rate regulators (8) which are provided in the carrier part (6) differ from one another in terms of their regulating properties.

3. Flow element as claimed in claim 1 or 2, **characterised in that** the restrictors (9) of at least two of the flow rate regulators (8) which are provided in the carrier part (6) differ from one another in terms of their regulating properties.

4. Flow element as claimed in any one of claims 1 to 3, **characterised in that** the circumferential walls, delimiting a control gap (10), of at least two of the flow rate regulators (8) which are provided in the carrier part (6) have different regulating profiles from one another with differing regulating properties.

5. Flow element as claimed in any one of claims 1 to 4, **characterised in that** the maximum flow capacity of the flow rate regulator unit (5) can be fixed in a variation spectrum by selecting different flow rate regulators (8) and in particular by selecting different restrictors (9) and/or the regulating profiles for at least two of the flow rate regulators (8) which are provided on the carrier part (6).

6. Flow element as claimed in any one of claims 1 to 5, **characterised in that** the maximum flow capacity of the flow rate regulator unit (5) can be fixed by the number of insertion openings (7), equipped with a flow rate regulator (8), in the carrier part (6).

7. Flow element as claimed in any one of claims 1 to 6, **characterised in that** at least three insertion openings (7) are provided in the carrier part (6), of which a flow rate regulator (8) is arranged in at least two insertion openings (7), and of which at least one insertion opening (7) is closed by means of a plug (13).

8. Flow element as claimed in any one of claims 1 to 7, **characterised in that** at least one of the flow rate regulators (8) which are provided on the carrier part (6) is configured as a regulator insert which comprises the restrictor (9) and the at least one profiled circumferential wall and which regulator insert is inserted in an insertion opening (7).

9. Flow element as claimed in claim 8, **characterised in that** the restrictor (9) or the regulator insert is inserted releasably or interchangeably into an insertion opening (7).

10. Flow element as claimed in any one of claims 1 to 9, **characterised in that** a jet regulator or at least one jet splitter (4), which divides the stream of water into a multiplicity of individual jets, is connected downstream of the flow rate regulator unit (5) in the direction of flow.

11. Flow element as claimed in any one of claims 1 to 10, **characterised in that** the carrier part (6) is also formed as a jet splitter (4) of a jet regulator, which jet splitter (4), in use, divides the inflowing water into a plurality of individual jets.

12. Flow element as claimed in claim 11, **characterised in that** at least one jet-regulating or jet-shaping grid or mesh structure is connected downstream of the jet splitter (4) of the jet regulator in the direction of flow.

13. Flow element as claimed in any one of claims 10 to 12, **characterised in that** the flow rate regulator unit (5) and the jet regulator or jet splitter (4) are spaced apart from one another.

14. Flow element as claimed in any one of claims 10 to 13, **characterised in that** the flow rate regulator unit (5) and optionally the jet regulator or jet splitter (4) are provided in a common insert housing or cartridge housing.

15. Method for producing a flow element as claimed in any one of claims 1 to 14, **characterised in that** the number of insertion openings (7), which are to be equipped with a flow rate regulator (8) or a restrictor (9), required for a fixed maximum flow rate per unit of time is determined by measuring the flow capacity and, in dependence thereon, by inserting flow rate regulators (8) or restrictors (9) into further insertion openings (7) or by removing further flow rate regulators (8) or restrictors (9) from insertion openings (7) and by closing the insertion openings (7) which are not required for a flow rate regulator (8) in the carrier part (6).

## Revendications

1. Dispositif d'écoulement sanitaire (1, 2, 30), qui présente une unité régulatrice de débit (5) avec une partie de support (6) s'étendant sur la section transversale libre d'une partie de conduite de fluide, cette partie de support (6) comportant au moins deux ouvertures d'insertion (7) espacées l'une de l'autre, dans lesquelles est chaque fois disposé un régulateur de débit (8), dans lequel chaque régulateur de débit (8) présente un corps d'étranglement (9) en matériau élastique de section transversale ronde en périphérie extérieure, qui délimite une fente de commande (10) entre lui-même et une paroi périphérique entourant l'ouverture d'insertion (7), dans lequel les corps d'étranglement subissent, sous la pression du fluide en écoulement, une compression telle dans la direction d'écoulement que cette compression provoque un élargissement circonférentiel des corps d'étranglement (9) qui rétrécit la fente de commande (10) déterminant le débit des régulateurs de débit (8), **caractérisé en ce que** les corps d'étranglement (9) des régulateurs de débit (8) sont de forme conique, tronconique ou sphérique.

2. Élément d'écoulement selon la revendication 1, **caractérisé en ce qu'**au moins deux des régulateurs de débit (8) prévus dans la partie de support (6) diffèrent l'un de l'autre par leurs propriétés de régulation.

3. Élément d'écoulement selon la revendication 1 ou 2, **caractérisé en ce que** les corps d'étranglement (9) d'au moins deux des régulateurs de débit (8) prévus dans la partie de support (6) diffèrent l'un de l'autre par leurs propriétés de régulation.

4. Élément d'écoulement selon l'une quelconque des revendications 1 à 3, **caractérisé en ce que** les parois périphériques d'au moins deux des régulateurs de débit (8) prévus dans la partie de support (6), qui délimitent une fente de commande (10), présentent des profilages de régulation différents l'un de l'autre avec des propriétés de régulation différentes.

5. Élément d'écoulement selon l'une quelconque des revendications 1 à 4, **caractérisé en ce que** le débit maximal de l'unité régulatrice de débit (5) peut être fixé dans un spectre de variantes par le choix de différents régulateurs de débit (8) et, en particulier, par le choix de différents corps d'étranglement (9) et/ou de différents profilages de régulation pour au moins deux des régulateurs de débit prévus sur la partie de support (6).

6. Élément d'écoulement selon l'une quelconque des revendications 1 à 5, **caractérisé en ce que** le débit maximal de l'unité régulatrice de débit (5) peut être fixé par le choix des ouvertures d'insertion (7) équipées d'un régulateur de débit (8) dans la partie de support (6).

7. Élément d'écoulement selon l'une quelconque des revendications 1 à 6, **caractérisé en ce qu'**il est prévu dans la partie de support (6) au moins trois ouvertures d'insertion (7), parmi lesquelles un régulateur de débit (8) est disposé dans au moins deux ouvertures d'insertion (7) et parmi lesquelles au moins une ouverture d'insertion (7) est fermée au moyen d'un bouchon (13).

8. Élément d'écoulement selon l'une quelconque des revendications 1 à 7, **caractérisé en ce qu'**au moins l'un des régulateurs de débit (8) prévus sur la partie de support (6) est configuré en forme d'élément de régulateur comprenant le corps d'étranglement (9) et ladite au moins une paroi périphérique profilée, ledit élément de régulateur étant inséré dans une ouverture d'insertion (7).

9. Élément d'écoulement selon la revendication 8, **caractérisé en ce que** le corps d'étranglement (9) ou l'élément de régulateur est inséré de façon amovible ou interchangeable dans une ouverture d'insertion (7).

10. Élément d'écoulement selon l'une quelconque des revendications 1 à 9, **caractérisé en ce qu'**un régulateur de jet ou au moins un brise-jet (4) divisant le courant d'eau en une multiplicité de jets individuels est placé en aval de l'unité régulatrice de débit (5) dans la direction d'écoulement.

11. Élément d'écoulement selon l'une quelconque des revendications 1 à 10, **caractérisé en ce que** la partie de support (6) est également réalisée sous la forme d'un brise-jet (4) d'un régulateur de jet, ledit brise-jet (4) divisant en service le courant d'eau entrant en une multiplicité de jets individuels.

12. Élément d'écoulement selon la revendication 11, **caractérisé en ce qu'**au moins une structure de grille ou de tamis, régularisant le jet ou formant le jet, est placée en aval du brise-jet (4) du régulateur de jet dans la direction d'écoulement.

13. Élément d'écoulement selon l'une quelconque des revendications 10 à 12, **caractérisé en ce que** l'unité régulatrice de débit (5) et le régulateur de jet ou le brise-jet (4) sont espacés l'un de l'autre.

14. Élément d'écoulement selon l'une quelconque des revendications 10 à 13, **caractérisé en ce que** l'unité régulatrice de débit (5) et, éventuellement, le régulateur de jet ou le brise-jet (4) sont prévus dans un boîtier d'insertion ou de cartouche commun.

15. Procédé de fabrication d'un élément d'écoulement selon l'une quelconque des revendications 1 à 14, **caractérisé en ce que** l'on détermine le nombre des ouvertures d'insertion (7) à équiper d'un régulateur de débit (8) ou d'un corps d'étranglement (9) nécessaire pour un débit maximal fixé par unité de temps par la mesure du débit et en fonction de celui-ci par l'insertion de régulateurs de débit (8) ou de corps d'étranglement (9) dans d'autres ouvertures d'insertion (7) ou par l'enlèvement d'autres régulateurs de débit (8) ou d'autres corps d'étranglement (9) hors d'ouvertures d'insertion (7) ainsi que par la fermeture des ouvertures d'insertion (7) non nécessaires pour un régulateur de débit (8) dans la partie de support (6).
